(19) Europäisches Patentamt

European Patent Office

Office européen des brevets

(11) **EP 1 035 076 A2**

(12) **EUROPEAN PATENT APPLICATION**

(43) Date of publication:
**13.09.2000 Bulletin 2000/37**

(51) Int. Cl.[7]: **C02F 1/52**, C02F 1/72

(21) Application number: **00500034.4**

(22) Date of filing: **03.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **05.03.1999 ES 9900464**

(71) Applicant:
**Empresa de Transformaci n Agraria, S.A. (TRAGSA)
Madrid 28003 (ES)**

(72) Inventors:
• **Soria Garcia, Jose Luis
47010 Valladolid (ES)**
• **Rodriguez Guerra, Francisco Javier
28016 (ES)**
• **Asensio Aguilar, Gregorio
46182 Montecanada (Valensia) (ES)**
• **Fustero Lardies, Santos
46007 Valencia (ES)**
• **Gonzalez Nunez, Elena,
Str. Poligono 33
46117 Betera, (Valencia) (ES)**

(74) Representative:
**Gonzalez Gomez, Maria Virtudes
C/ PEDRO TEIXEIRA, No 10, 5o 4
28020 Madrid (ES)**

(54) **Method for the treatment of water containing suspended or dissolved organic and/or inorganic matter by precipitation in situ of oxygenised compounds of titanium**

(57) The method involves (a) mixing the water to be treated with a solution which is made up of a compound of titanium selected from a compound of Ti (IV), a compound of Ti (III), and their mixtures, keeping the pH of the mixture at a value suitable for the precipitation *in situ* of the titanium in the form of an oxygenised compound of titanium; (b) shake the mixture resulting from stage (a) for the period of time required to allow he formation of stable floccules; and (c) separate the flocculated solid matter. This method facilitates the separation of the suspended matter by processes of coagulation-flocculation and the dissolved matter by processes of adsorption and ionic exchange. Of interest for decontaminating waste water.

**EP 1 035 076 A2**

Printed by Xerox (UK) Business Services
2.16.7 (HRS)/3.6

## Description

### FIELD OF THE INVENTION

This invention is related to the decontamination of water. Specifically, the invention refers to a method for the treatment of water which contains organic and/or inorganic suspended or dissolved matter by means of the precipitation *in situ* of hydrated titanium oxide, which enables the matter in suspension to be separated through coagulation-flocculation processes, as well as the separation of the matter dissolved by processes involving adsorption and ionic exchange.

### ANTECEDENTS OF THE INVENTION

The use of coagulation and flocculation processes is widespread in the field of waste water treatment as an operative technique which enables the matter held insuspension, including colloid matter, to be separated.

Generally speaking, colloid particles are surrounded by a layer of counterions which adhere strongly to these and form a sphere whose radius determines the mobility of the particles. The potential in this layer with reference to the potential of dissolution is called z potential or electro-kinetic potential. A further layer of ions is situated around the counterions with the same charge as the colloid particle, constituting a double electrical layer. This double electrical layer causes static electrical repelling forces among the particles which are superior to the Van der Waals forces which attract them and prevent their agglomeration and the formation of larger sized particles.

In Thermodynamic terms, colloid instability can be expressed by the following equation:

$$dG = y \cdot d\,\sigma$$

where

dG is the variation of the free enthalpy of Gibbs;
y is the superficial tension and
d $\sigma$ is the variation on the surface of the particles.

The agglomeration of particles causes d $\sigma$<0 (the surface area exposed by all of these is less) and, therefore, dG<0. This indicates that thermodynamics favours the process of colloid destabilisation. The persistence of colloids is the result of kinetic collapse as the colloids remain kinetically invariable despite being thermodynamically unstable.

In order to allow the destabilisation of the colloid particles and for these to unite to form aggregates, recourse has been made to the addition of ions with an opposite charge to these particles (coagulating agents). Adding these agents reduces the thickness of the double layer of ions (compression of the double layer) which allows the colloid particles to approach each other and join together, producing larger sized particles which can be eliminated from the medium by conventional processes involving solid/liquid separation such as sedimentation or filtering.

The destabilisation process for the colloid particles which facilitates the formation of aggregates is termed coagulation. In the case of waste water with organically generated contamination in which the particles in suspensionusually have negative charges, coagulation comes about by adding electrolytes which contain highly charged cations. The more commonly used cations are Fe (III) and Al (III) which are normally used in the form of watery solutions of the following salts: hydrated sulphate of aluminium, mixed hydrated chloride salt aluminium sulphate, sodium aluminate, iron trichloride, ferric sulphate, and mixed chloride salt and iron sulphate (III) and ferrous heptahydrated sulphate.

The addition of one of these salts to waste water and the proper adjustment of the pH will cause the precipitation of the corresponding dibasic or tribasic hydroxide of the metallic cation, which is adsorbed onto the surface of the particle neutralising its charge and allowing it to form aggregates.

The capacity of the cations to destabilise the colloid particles is a function of thedensity of their charge, which increases with the charge of the cation and decreases with its radius. Thus, the A1 (III) and Fe (III) cations are more effective than the Ca (II) and Fe (II) cations, which are used to a lesser extent. In accordance with this reasoning, in the case of equal ionic radiuses, the tetravalent cations should be more effective than the aforementioned cations.

The invention which is the subject of this patent request considers the possibility of using the cation Ti (IV) as an inductor agent for the coagulation of suspended matter present in water with the aim of separating the solids which have been formed and reducing the contaminating load.

A variety of publications have dealt with the use of various compounds of Ti (IV) in decontamination processes using their adsorption and ionic exchange properties. They are used in the form of sodium titanate in order to separate radioactive elements (W097/23290) and strontium (JP9010580). As hydrated titanium oxide it is used for the separation of phosphates (JP61187939), cobalt (JP61138530) and a range of radioactive impurities (JP5146674). It is also used for the separation of phosphates such as $MgO/TiO_2$, (JP87210713) and for the separation of heavy metals such as amorphous silicate of titanium (US5053139). As oxide it is used for the adsorption of organic and inorganic contaminants (RU2056935).

In all these publications the aim is to obtain a solid matrix which includes Ti (IV) in its composition and which, once in contact with the waste water, can retain a variety of contaminating elements on the surface of this current of water.By separating the solid matrix from the waste water, treated water is obtained.

In addition, the traditional waste water treatment processes use Fe (III) and Al (III) salts in the processes of coagulation and flocculation, as has been stated previously, allowing the separation of the suspended matter and only a slight fraction of the soluble matter retained in the precipitate.

Thus, although there are numerous coagulating agents suitable for destabilising colloid particles, they are not always effective in the case of certain waste, and so, the need to find more effective and more general coagulant agents which allow the separation of the suspended matter and the dissolved matter, thus reducing the water contamination to such an extent that it may be suitable for pouring into the public water supply. Another condition required of the coagulant agents is that the aggregates they constitute with the solids be easily separated from the water by physico-chemical processes.

The invention provides a solution to the existing need by using preferably watery solutions with compounds of Ti (IV) and/or Ti (III), optionally these can be used together with other coagulating agents and/or flocculants, and the addition of these agents to the water to be treated with the aim of producing precipitation *in situ* of the hydrated titanium oxide, which permits the combined process of flocculation of the suspended matter and the adsorption to the precipitate of the soluble matter and the exchange of contaminating ions with the medium, thus achieving the separation of all or part of the suspended or dissolved matter, which leads to a significant reduction of the contaminating load to levels which can be suitable for pouring the treated water into the public water supply. The aggregates which are formed from these agents are easily filtered without producing blockage of the filtering medium, and can be sedimented or floated.

## COMPENDIUM OF THE INVENTION

The invention provides a method for treating water which contains organic and/or inorganic matter in suspension or dissolved. The method is based on the formation of hydrated titanium oxide in the water to be treated, from solutions which comprise, at least, a compound of titanium selected from a compound of Ti (III), a compound of Ti (IV) or their mixtures, which facilitates the destabilisation of the colloids and their flocculation, as well as the adsorption of the matter dissolved over the precipitate of this oxide. The solid obtained, which contains the precipitate of titanium together with the matter contaminating the water, is later separated and treated water with a reduced concentration of contaminating compounds is obtained.

The method has been tested successfully in the treatment of effluent from pig farms and on urban waste water, although it can be applied to all water with organic and/or inorganic matter in suspension or dissolved.

## DETAILED DESCRIPTION OF THE INVENTION

The invention provides a general method for the treatment of water which contains organic and/or inorganic matter in suspension or dissolved, by the precipitation *in situ* of hydrated titanium oxide (IV). The water to be treated may have an amount of solids in suspension and a very variable Chemical Demand for Oxygen (CDO). As an example, the water to be treated may have between 0 and 100 g/L of solids in suspension and a CDO of between 0 and 100,000 mg/L. The procedure laid down for the invention consists of the stages:

a) mix the water to be treated with a solution, preferably watery, which contains a compound of titanium selected from among a compound of Ti (IV), a compound of Ti (III), or their mixtures, keeping the pH of the mixture within a range suitable for the precipitation *in situ* of the titanium in the form of an oxygenised compound of titanium;
b) shake the mixture produced by stage a) for a period of time long enough to allow the formation of stable floccules; and
c) separate the flocculated solid matter.

When first carrying out specific use of the general method of the invention for the treatment of water, a watery solution of a compound of Ti (TV) is used. Thus, the invention provides a method for the treatment of water which contains organic and/or inorganic matter in suspension or dissolved, by the precipitation *in situ* of hydrated titanium oxide, which consists of the stages:

a) mix the water to be treated with a solution of a compound of Ti (IV), keeping the pH of the mixture within a range for the precipitation *in situ* of the titanium in the form of an oxygenised compound of titanium;

b) shake the mixture produced by stage a) for a period of time long enough to allow the formation of stable floccules; and

c) separate the flocculated solid matter.

The method provided by this invention begins with the preparation of the solution 30of this compound of Ti (IV).

When an acid solution with a compound of Ti (IV) is neutralised, this results in the precipitation of species of hydrated titanium oxide which allows the destabilisation of the colloid. The same happens with hydroxide of Fe (III) and Al (III), with the advantage that in Ti (IV) the load is greater, and so it is a more effective coagulant.

Any compound of Ti (IV) capable of generating species of Ti (IV) in a watery solution, such as $TiF_4$, $TiCl_4$, $TiBr_4$, $TiI_4$, $Ti(SO_4)_2$, $TiOSO_4$, $TiS_2$ or an alcoxide of Ti (IV) type $TiR_4$, where R is a linear or branched hydrocarbonated chain with or without the presence of heteroatoms, such as, for example, $Ti(Obu)_4$, $Ti(OEt)_4$ and $Ti[N(C_2H_5)_2]_4$.

In order to prepare the watery solution which contains a compound of Ti (IV) this compound of Ti (IV) is dissolved in water, keeping the pH of the solution always under 3 in order to prevent precipitation of the oxide.

The water to be treated, contained in a tank, is shaken vigorously while the solution containing the compound of Ti (IV) is being added so that the reagent is adequately dispersed and a more homogeneous coagulation obtained. The pH of the mixture must be kept at a value suitable for the precipitating the Ti (IV) in the form of hydrated titanium oxide, which can be achieved by keeping the pH of the mixture between 3 and 10, preferably between 5 and 7. In the event that the final pH of the mixture were not within these limits, corrective measures must be taken by adding an inorganic acid, for example, calcium hydroxide, as required.

The addition of the reagent [Ti (IV)] may also be done with linear dosage systems, forcing the water to be treated by means of a pump and dosing the solution of the compound of Ti (IV) within the pipe with the help of another pump. To improve the mixture of both flows, a static mixer can be used.

The amount of Ti (IV) which has to be dosified varies depending on the concentration of contaminants present in the water to be treated and the nature of this water. When the coagulation of the suspended matter is under way, the adequate dosage of Ti (IV) is that which minimises the value of the z potential in the solution. This can be measured with a suitable instrument.

As the compound of Ti (IV) is added, the precipitation of the hydrated titanium oxide takes place and causes the coagulation of the suspended matter, the adsorption of the matter in solution, and the apparition of small particles can be observed.

Once the addition of the solution of the compound of Ti (IV) is over, the mixture is shaken slowly for the period of time required for the destabilised colloidparticles to come into contact with each other and form larger sized particles (flocculation). Generally speaking, the formation of stable floccules takes place at the end of a period of time of between 5 and 30 minutes, maintaining gentle shaking. In addition, both the organic and the inorganic soluble matter is adsorbed on the surface of the precipitate, thus, a more purified water is obtained.

The mixture flocculates adequately without the need to add the flocculant agents normally used in water treatment, for example, organic polymers, such as polyacrylamides, polyamines, polymidamines. polyamiodamines, polybutadines, polyacrylates and carboxylic polymers or polyglycides, although these flocculant agents help to obtain more stable floccules. In the event of using these, they are added to a watery solution of approximately 1 g/L once the mixture has coagulated.

The watery solution which comprises the Ti (IV) can also contain, if so wished, one or more coagulant agents from among those normally used for water treatment. These compounds are the salts of Fe (III) and Al (III) such as iron trichloride, aluminium trichloride, iron sulphate (III), aluminium sulphate and sodium aluminate, and each one of these is used separately or in combined mixtures. In the event of using the titanium compounds with other coagulating agents, a watery solution is prepared with the mixture of the desired coagulating agents and this is added to the water to be treated in the same way as when the solution containing a compound of Ti (IV) is used as the sole coagulating agent.

The separation of the solids formed at the end of flocculation can be carried out by conventional methods for the separation of solids and liquids, for example, by pouring out, filtering (with or without a vacuum), and sedimentation. It has been found that the flocculated mixture filters easily without blocking the filter and produces a cake with weak adhesion to the filtering medium.

When the general method of the invention for the treatment of water is carried out for a second time, the watery solution is composed of a compound of Ti (III). Thus, The invention provides a general method for the treatment of water which contains organic and/or inorganic matter in suspension or dissolved, by the precipitation *in situ* of hydrated titanium oxide (IV), which consists of the stages:

a) mix the water to be treated with a solution of a compound of Ti (III) keeping the pH of the mixture at a value of between 4 and 8;

b) add an oxidant capable of oxidising the Ti (III) to Ti (IV);

c) shake the mixture produced by stage a) for a period of time long enough to allow the formation of stable floccules; and

d) separate the flocculated solid matter.

As in the previous case, the method provided by this invention begins with the preparation of the solution of the compound of Ti (III).

Any compound of Ti (III) which can be maintained in solution, as, for example, $Ti_2(SO_4)_3$, $TiC1_3$, $TiF_3$, and $Ti_2S_3$ can be used as compounds of TI (III).

In order to prepare the watery solution which contains a compound of TI (III), this compound TI (III) is dissolved in water, keeping the solution at acid pH so as to prevent the precipitation of the Hydroxide of Ti (III).

For the specific carrying out of the general method of the invention, the first stage consists of the addition of the solution of TI (III) to the water to be treated while this is being vigorously shaken in order to better disperse the reagent.

As in the previous alternative, that is to say, using Ti (IV), the water to be treated can be contained in a tank, where the solution containing a compound of TI (III) is added, while shaking or with the addition of the reagent [Ti (III)] it can be carried out with linear dosage systems, forcing the water to be treated by means of a pump and dosing the solution of the compound of Ti (III) within the pipe with the help of another pump. In order to improve the mixture of both flows a static mixer can be used.

In any case, the amount of Ti (III) which has to be dosed varies depending on the concentration of contaminants present in the water to be treated and the nature of this water as has been stated before.

After the addition of the solution which contains the compound of Ti (III), the pH of the mixture is measured, and corrected, whenever necessary , with an acid or an appropriate base so that the final pH of the mixture is between 4 and 8. In these conditions, the coagulation of the suspended matter begins and is completed with the oxidising of the Ti (III) to Ti (IV), by preferably gentle shaking. This causes the precipitation of the Ti (IV) in the form of hydrated titanium oxide as long as the pH of the mixture is kept at an adequate value preferably of between 5 and 7.

Oxidising is carried out with the help of an appropriate oxidant. Generally, any oxidant with a redox potential capable of oxidising the Ti (III) to Ti (IV), for example, air, oxygen, ozone, hydrogen peroxide, molecular chloride, Hypochlorite or hypochlorite acid, potassium permanganate, potassium dichromate, ferric salts, etc. may be used . When the oxidant is a gas, it suffices to bubble it up within the solution, which also helps to keep up the gentle shaking required for flocculation, while, in the other cases, the oxidising solution is added and gentle shaking maintained.

As the oxidising of Ti (III) to Ti (IV) occurs, the mixture loses the violet colour characteristic of Ti (III). The progress of the oxidising reaction maybe followed by the disappearance of the violet colour due to the Ti (III).

At the end of oxidising of the Ti (III) to Ti (IV), the mixture continues to be shaken, preferably gently, for the period of time required for the destabilised colloid particles to come into contact with each other and form larger sized particles (flocculation). Generally speaking, the formation of stable floccules takes place at the end of a period of time of between 5 and 30 minutes, maintaining gentle shaking. In addition, both the organic and the inorganic soluble matter is adsorbed on the surface of the precipitate, thus, a more purified water flow is obtained.

The mixture flocculates adequately without the need to add the flocculant agents normally used in water treatment, although these flocculant agents help to obtain more stable floccules. In the event of using these, they are added to a watery solution of approximately 1 g/L once the mixture has coagulated.

The watery solution which is made up of the Ti (III) can also contain, if it is wished, one or more coagulant agents from among those normally used for water treatment, for example, salts of Al (III). In this case a watery solution is prepared with the mixture of the desired coagulating agents and this is added to the water to be treated in the same way as when the solution containing a compound of Ti (III) is used as the sole coagulating agent.

Once all the Ti (III) has oxidised to Ti (IV) and the mixture has flocculated, the separation of the solids is carried out with conventional methods for the separation of solids and liquids, for example, by pouring out, filtering or sedimentation.

With either of the alternatives [Ti (III) or Ti (IV)] the Ti is separated almost quantitatively and concentrations in the effluent inferior to 1 mg/L are obtained. In addition, Ti is a non-toxic metal and so does not contaminate the effluent.

The method for the treatment of water provided by this invention is especially advantageous as the formation of the hydrated titanium oxide is carried out *in situ*, that is to say, within the water to be treated. In order to cause the precipitation of the titanium kin the water to be treated and for it to be adequately dispersed, the compound of Ti (III9 or Ti (IV) must be dosed in diluted form.

The hydrated titanium oxide facilitates the destabilisation of the colloid as occurs with Hydroxide of Fe (III) and Al (III), with the advantage that in the cation Ti (IV) the charge is greater, and so it is a more effective coagulant.

The formation of the hydrated titanium oxide entails other advantages, among which are the following:

- The enormous surface area of the precipitate and thus the high capacity for adsorption, which enables the organic and inorganic matter dissolving to be adsorbed through the surface of the precipitate; and
- The well known capacity of titanium oxide to act as ion switchers, which facilitates the separation of phosphates, alkali metals, alkaline earth metals, zinc, copper, cobalt, uranium and other elements present in the water to be treated, including the waste water from nuclear power stations.

Thus, the high capacity of the compounds of Ti (IV) as coagulating agents together with the capacity of hydrated titanium oxide to adsorb soluble matter and for ionic exchange with the ions present in the water, make these compounds of Ti (III) and Ti (IV) excellent reagents for water treatment in general, including decontamination of a variety of types of waste water.

Numerous tests have shown that, in the case of the treatment of effluent from pig farms, which cannot be filtered directly due to the blockage it causes in the filtering medium, CDO values of around 5,000 mg/L in the filtered matter have been achieved, starting from purinee with a CDO equal or higher than 50,000 mg/L, together with a reduction in the concentration of ammonium in the matter filtered of up to 40%. In the case of urban waste water, with the method proposed by this invention, the more important contamination parameters (CDO, $DBO_5$, ammonia and nitrates) were reduced to below the most demanding conditions for adding it to the water supply [CDO less than 160 mg/L, $DBO_5$ less than 40 mg/L, sedimentable matter less than 80 mg/L, ammonia less than 15 mg/L and nitrates less than 10 mg/L]

The method for the treatment of water provided by this invention allows the separation of the organic suspended matter through coagulation flocculation processes and the separation of the organic and/or inorganic dissolved matter by adsorption processes in the precipitate and the exchange of contaminating ions with the medium, and so the total or partial separation of the material in suspension and/or dissolved in the water to be treated is achieved, which results in a significant reduction in the contaminating load to levels suitable for adding the treated water to the public supply.

The following examples serve to illustrate specific ways to carry out the method of the invention and are not to be considered as limiting the scope of the invention.

### Example 1

500 ml of purinee with a CDO of 25,000 mg/L, a concentration of $N-NH_4$ of 3.03 g/L and pH = 7.6 is put in a container, and shaken. 10 mL of a watery solution with 20% of $Ti_2 (SO_4)$ and 2% of $H_2 SO_4$ is added slowly, and the apparition of floccules becomes noticeable. 10 mL of hydrogen peroxide in the proportion of 5% in weight/volume is added and this leads to the oxidising of the cation titanium (III) to titanium (IV), and the violet colour disappears from the solution. Gentle shaking continues for 30 minutes to allow the formation of larger sized floccules. Finally, the flocculated mixture is vacuum filtered using filter paper. The filtered matter obtained is almost colourless and has an ammonia content of 2.73 g/L.

The same procedure was repeated with 15 mL of the same solution of $Ti_2 (SO_4)_3$ and a concentration of ammonia in effluent of 2.02 g/L was obtained.

### Example 2

1 litre of purinee with pH 7.2 and a CDO of 25,000 mg/L is added to a container, and vigorous shaking is begun. 37 mL of a watery solution containing 10% in weight of $TiC1_3$ and 25% in weight of HC1 is added slowly. A mixture is obtained with pH of 4.73. Ozonization of this mixture is begun with a current of 4g/h of ozone in oxygen until the violet colour of the floccules disappears.

The mixture is filtered in a Büchner funnel on a paper filter which filters quite quickly and a very clear filtered matter is produced. This filtered matter has a CDO of 4,320 mg/L. The cake obtained has 17% degree of dryness.

### Example 3

1 L of purinee (pH 6.5 and CDO of 49,100 mg/L) is added to a container . 100mL of a solution of 140 g/L of the compound $TiOSO_4 \cdot xH_2 SO_4 \cdot xH_2 O$ (Aldrich) is added with intensive shaking to disperse the reagent. A pH of 4.92 is achieved.

It filters fast and the resulting matter is clear. The CDO of the filtered matter is 7.260 mg/L. The results of the analysis of the untreated purine and the filtered matter are shown in Table 1.

Table 1

| Analysis of untreated and treated purine | | | |
|---|---|---|---|
| **Parameter** | **Raw purine** | **Filtered matter** | **Reduction** |
| $N-NH_4^+$ (mg/L) | 3040 | 1450 | 52.3% |
| N-organic (mg/L | 530 | 130 | 75.5% |
| $N-NO_3$ (mg/L) | 130 | 23 | 82.3% |
| CDO (mg/L) | 49,100 | 7,260 | 85.2% |

It has been observed that apart from eliminating the suspended organic matter, which leads to a drastic reduction of the CDO, very high percentages of ammonia and nitrates, which are soluble species, are eliminated.

### Example 4

500 mL of purine with pH 7 and a CDO of 49,100 mg/L are added to a container and shaking is begun using a magnetic shaker at 700 rpm. 15 mL of 97% pure butoxide of titanium (IV) are added slowly. Once the addition is complete, the shaking is reduced to 30 rpm for 30 minutes. The mixture is observed to clarify and floccules appear.
At the end of the 30 minutes, the pH of the mixture is about 5. The mixture vacuum filters easily in a Büchner funnel, and the filtered matter is clear.

### Example 5

This example deals with the treatment of a sample of purine with a high load of organic matter (CDO 70,400 mg/L) and pH 7.09. 0.5 L of this purine is mixed with 0.5 L of the filtered matter from the previous treatment of another similar sample. The pH of the resulting mixture is 7.09. While 35 mL of a solution with 10% of $TiCl_3$ and 25% of HCl is added, vigorous shaking begins. The pH of the resulting mixture is 3.05. The reused filtered matter has a CDO of 8,000 mg/L and an excess of $H_2O_2$ and so the titanium (III) oxidises to titanium (IV) on being added to the mixture. After shaking the mixture slowly, it vacuum filters quickly in a Büchner funnel, and the filtered matter obtained has a CDO of 8,480mg/L and a cake with a dryness level of 17%.

### Example 6

500 mL of purine (pH = 8.3 and CDO = 19,100) are shaken in a container while adding 15 mL of a solution of 50 g/L of ferric sulphate, 40 mL of a solution of 140 g/L of $TiOSO_4 \cdot xH_2SO_4 \cdot xH_2O$ and 5 mL of a solution of 1 g/L of sodium polyacrylamide. The final pH of the mixture is 6.8. It is shaken for 5 minutes at 30 rpm to allow the formation of larger sized floccules, and the mixture is then filtered immediately. A Büchner funnel was used for the vacuum filtration together with filter paper, or only a cloth is used in order to allow the mud to drain through the effect of gravity. In both cases filtering of the mud is done quickly with no blockage of the filtering medium. The CDO obtained from vacuum filtering was 7,030 mg/L and that obtained by filtering with the cloth was 8,410 mg/L.

### Example 7

0.5 L of urban waste water with a CDO of 300 mg/L and a total concentration of solids of 350 mg/L are added to a container. It is shaken while dosing slowly with a solution of 1.5 mL of 50 g/L of $TiOSO_4 \cdot xH_2O \cdot xH_2SO_4$ , and, afterwards, calcium hydroxide up to pH 6 is added. It is shaken slowly for half an hour to allow the formation of floccules. After this time, the mixture is poured out, and the resulting matter is clear, transparent and with no appreciable presence of solids or murkiness. Its CDO is 35 mg/L and it has a concentration of ammonia of 7.6 g/L.

### Claims

1. A method for the treatment of water which contains organic and/or inorganic matter in suspension or dissolved, and which consists of the following stages:

   a) mix the water to be treated with a solution which consists of a compound of titanium selected from a compound of Ti (IV) , a compound of Ti (III), and their mixtures, keeping the pH of the mixture at a value suitable for the precipitation *in situ* of the titanium in the form of hydrated titanium oxide;

b) shake the mixture obtained from stage a) for the period of time required to allow the formation of stable floccules; and

c) separate the flocculated matter.

2. The method according to revindication 1, in which the aforementioned solution consists of a compound of Ti (IV).

3. The method according to revindication 2, in which the aforementioned compound of Ti (IV) is a salt or an alcoxide of Ti (IV).

4. The method according to revindication 2, in which the aforementioned solution is also composed of a coagulating agent.

5. The method according to revindication 4, in which the coagulating agent is selected from the group formed by salts of Fe (III), salts of Al (III) and their mixtures.

6. The method according to revindication 2, in which the pH of the mixture suitable for the precipitation *in situ* of the titanium in the form of hydrated titanium oxide is between 3 and 10.

7. The method according to revindication 6, in which the pH of the mixture suitable for precipitation *in situ* of the titanium in the form of hydrated titanium oxide is between 5 and 7.

8. The method according to revindication 2, which takes in the correction of the pH of the mixture, when required, by means of the addition of an inorganic acid or a base.

9. The method according to revindication 2, in which the mixture resulting from stage a) is shaken for a period of time of between 5 and 30 minutes.

10. The method according to revindication 2, in which the flocculated solid

matter is separated with conventional techniques for separating solids from liquids.

11. The method according to revindication 2, which also includes the addition of a flocculant agent.

12. The method according to revindication 2, which consists of the stages :

a) Mix the water to be treated with a watery solution which is made up of a compound of Ti (IV), optionally together with one or more coagulating agents and/or flocculants, keeping the pH of the mixture at between 3 and 10 so that it precipitates the Ti (IV) *in situ* in the form of hydrated titanium oxide;

b) Shake the mixture resulting from stage a) for a period of time of between 5 and 30 minutes in order to allow the formation of stable floccules, and

c) separate the flocculated solid matter.

13. The method according to revindication 1, in which the aforementioned watery solution is made up of a compound of Ti (III).

14. The method according to revindication 13, in which the aforementioned compound of Ti (III) is a salt of Ti (III).

15. The method according to revindication 13, in which the aforementioned watery solution also includes a coagulating agent.

16. The method according to revindication 15, in which the aforementioned coagulating agent is selected from the group made up of the salts of Al (III).

17. The method according to revindication 13, in which the pH of the suitable mixture for the precipitation *in situ* of the titanium in the form of hydrated titanium oxide is between 4 and 8.

**18.** The method according to revindication 13, which involves the correction of the pH of the mixture, whenever necessary, by means of the addition of an inorganic acid or a base.

**19.** The method according to revindication 13, which also involves the addition of an oxidant capable of oxidising Ti (III) to Ti (IV) after the mixing of the aforementioned solution which is made up of a compound of Ti (III) and the water to be treated.

**20.** The method according to revindication 19, in which the aforementioned oxidant capable of oxidising the Ti (III) to Ti (IV) is selected from the group made up of air, oxygen, ozone, hydrogen peroxide, molecular chloride, hypochlorite or hypochloric acid, potassium permananganate, ferric acid and potassium dichromate.

**21.** The method according to revindication 20, in which the mixture resulting from stage a), to which the oxidising substance has been added, is shaken for a period of time of between 5 and 30 minutes.

**22.** The method according to revindication 13, in which the oxygenised compound of titanium which precipitates *in situ* is the hydrated titanium oxide.

**23.** The method according to revindication 13, in which the flocculated solid matter is separated by conventional techniques for separating solids from liquids.

**24.** The method according to revindication 13, which also includes the addition of a flocculant agent.

**25.** The method according to revindication 13, which includes the stages:

a) mix the water to be treated with a watery solution made up of a compound of Ti (III), optionally together with one or more coagulating agents and/or flocculants, keeping the pH of the mixture at between 4 and 8;
b) add an oxidant capable of oxidising the Ti (III) to Ti (IV), keeping the pH of the mixture at between 4 and 8 so that it precipitates *in situ* the Ti (IV) in the form of hydrated titanium oxide;
c) shake the mixture resulting from stage b) for a period of time of between 5 and 30minutes in order to allow the formation of stable floccules, and
d) separate the flocculated solid matter.